# EUROPÄISCHE PATENTSCHRIFT

(11) **EP 0 951 416 B1**
(45) Veröffentlichungstag und Bekanntmachung des Hinweises auf die Patenterteilung: **15.05.2002**
(21) Anmeldenummer: 98905230.3
(22) Anmeldetag: 09.01.1998
(51) Int. Cl.: B62B 5/02

(54) **SACKKARREN ZUM TRANSPORTIEREN VON LASTEN**
SACK TROLLEY FOR TRANSPORTING LOADS
DIABLE POUR LE TRANSPORT DE CHARGES

(30) Priorität: 10.01.1997 DE 19700645
(43) Veröffentlichungstag der Anmeldung: 27.10.1999
(73) Patentinhaber: HECK, Jörg, D-8035 Stockdorf (DE)
(72) Erfinder: HECK, Jörg, D-8035 Stockdorf (DE)
(74) Vertreter: Haft, von Puttkamer, Berngruber, Czybulka
(86) Internationale Anmeldenummer: DE9800060
(87) Internationale Veröffentlichungsnummer: WO9830428

(56) Entgegenhaltungen:
- DE-A- 3 806 754
- DE-U- 8 713 561
- US-A- 2 608 258
- US-A- 4 049 083

## Beschreibung

Die Erfindung bezieht sich auf einen Sackkarren zum Transportieren von Lasten gemäss dem Oberbegriff des Patentanspruches 1.

Derartige Sackkarren mit einem Fahrgestell, einer Ladeschaufel und einem Radpaar am unteren Ende des Fahrgestelles sowie mit einer Handhabe am oberen Ende des Fahrgestelles sind dafür ausgelegt, das beschwerliche manuelle Tragen der Lasten zu ersetzen durch einen rollenden Transport. Lasten können mit derartigen einfachen Sackkarren nicht gehoben werden. Zum Heben von Lasten sind Gabelstapler bekannt, d.h. kleine angetriebene Fahrzeuge, die eine Hebevorrichtung zum vertikalen Anheben und Absetzen der auf der Ladeschaufel angeordneten Last aufweisen. Diese Gabelstapler werden in grossen Lagern verwendet, um in der Regel auf Paletten angelieferte Güter zu stapeln und vom Stapel wieder zu verteilen.

Es sind ferner Sackkarren bekannt, die geeignet sind, Lasten über Treppen zu transportieren. Diese weisen ein Fahrgestell auf, das am unteren Ende mit einem Radpaar und am oberen Ende mit einer Handhabe zum Ziehen oder Schieben des Sackkarrens versehen ist. Auf diesem Fahrgestell ist ein die Ladeschaufel für die Last aufnehmender Schlitten in beiden Richtungen verfahrbar. Mit einem derartigen Sackkarren können auch Lasten z.B. auf eine Ladeplattform eines Kraftfahrzeuges gezogen werden, indem der Sackkarren rückwärts an die Plattform gezogen wird, wonach anschliessend das Fahrgestell mit dem Radpaar nach oben verfahren und auf der Ladeplattform abgestellt wird. Durch Nachziehen des Schlittens für die Last kann diese dann auf die Ladeplattform gezogen werden. Mit einem derartigen Sackkarren ist jedoch ein Beladen von vorne, wobei dann der Sackkarren ausserhalb der Ladeplattform am Boden verbliebe, nicht möglich.

Ausserdem wäre es für einige Anwendungen, insbesondere beim Ziehen der Last über Treppen, günstig, wenn der Schwerpunkt des Gerätes bei aufgesetzter Last nach oben, in Richtung auf die Handhabe verschoben werden könnte.

Einen derartigen Sackkarren mit einem eingebauten Elektromotor beschreibt z.B. die DE 2423954.

Sackkarren zum vertikalen Anheben von Lasten sind bekannt. Die DE 9210702 U1 beschreibt einen Elektro-Hubkarren der zum Heben von Lasten geeignet ist. Die US 2895567 beschreibt ebenfalls eine elektrisch angetriebene Vorrichtung zum Heben und Transportieren von Lasten. Jedoch sind beide Konstruktionen nur in Richtung deren Längsachse bewegbar.

Die DE 8713561 U1 offenbart einen nach Art eines Sackkarrens ausgebildeten Handkarren, bei dem die Ladeschaufel mit einem Schlitten verbunden ist und längs des Fahrgestelles verfahrbar und in seiner jeweiligen Position festhaltbar ist. Bei diesem Sackkarren sind die Transporträder als feststellbare Lenkrollen ausgebildet, wobei am Grundgestell eine Festhaltevorrichtung zum Feststellen der Lenkrollen in wenigstens je zwei zum Längs- bzw. Quertransport bestimmten Stellungen vorgesehen ist, um breite sperrige Güter ohne eine starke Verschwenkung durch schmale Öffnungen transportieren zu können. Theoretisch ist durch eine Verstellung der Achsen der Lenkrollen um 90° zueinander ein Verschwenken des Sackkarrens um die Auflagefläche einer der Lenkrollen möglich. Dies ist jedoch vor allem bei starker Beladung mit einem sehr hohen Kraftaufwand seitens des Bedienpersonals verbunden. Zusätzlich kann sich diese Konstruktion bei einer unerwünscht starken Verschwenkung insbesondere bei schweren Lasten, unebenem Boden, und/oder bei unerfahrenem Bedienpersonal beim Verschwenken um eine der Lenkrollen als instabil erweisen, da die Drehachse ebenfalls beweglich ist. Insbesondere ist es mit dieser Konstruktion nicht möglich, Lasten anzuheben und auf der angehobenen Position sicher abzustellen.

Der Erfindung liegt die Aufgabe zugrunde, einen einfach konstruierten Sackkarren anzugeben, mit dem Lasten angehoben und auf der angehobenen Position sicher abgestellt werden können, wobei auch ein Beladen von vorne und eine günstige Schwerpunkteinstellung des Sackkarrens mit der beladenen Last möglich sein soll.

Diese Aufgabe ist gemäss der Erfindung durch die Merkmale des Patentanspruches 1 gelöst.

Demgemäss ist die Last auf einem längs des Fahrgestelles verschiebbaren Schlitten gelagert, der in beliebiger Höhenposition festgehalten werden kann; weiterhin ist am unteren Ende des Sackkarrens auf der einen Seite ein Standfuss, insbesondere in Form eines Drehpunktklotzes mit einem Drehteller, und auf der anderen Seite ein Stützrad vorgesehen, dessen Laufrichtung parallel zu den Rädern des Radpaares des Sackkarrens liegt.

Zum Absetzen der Last auf einer erhöhten Position, z. B. der Ladefläche eines Kraftfahrzeuges, wird der Sackkarren mit der aufgeladenen Last seitlich an die Ladefläche so herangefahren, dass der Standfuss mit dem Drehpunktklotz am Boden direkt neben der Ladeplattform liegt. Durch Aufstellen des Sackkarrens in die Vertikale gelangen dieser Standfuss und das Stützrad in Bodenkontakt. Die Last wird dann in die Höhe der Ladeplattform gefahren. Anschliessend wird der Sackkarren um den Standfuss in Richtung auf die Ladafläche verschwenkt, so dass die Last schliesslich über der Ladefläche gelegen ist und auf diese abgesenkt werden kann.

Dieser Sackkarren kann vorteilhafterweise auch als Karren ausgebildet werden, dex zum Befördern von Lasten über Treppen geeignet ist. Hierzu ist für die Last eine Schlittenanordnung aus zwei Schlitten vorgesehen. Der erste rahmenförmige Schlitten wird z. B. mit Hilfe eines Spindeltriebes längs des Fahrgestelles verschoben. Auf diesem ersten Schlitten gleitet frei ein zweiter, die Lastschaufel und die Last aufnehmender Schlitten. Zwischen den beiden Schlitten sowie dem zweiten Schlitten und dem Fahrgestell ist jeweils eine lösbare Verbindungseinrichtung vorgesehen. Standfuss und Stützrad sind am unteren Ende des ersten Schlittens angeordnet, wobei es zweckmässig ist, diese auf eine Welle aufsteckbar auszubilden, die über die Seitenränder des Sackkarrens hinauaragt. Dies hat auch den Vorteil, dass Standfuss bzw. Stützrad auf eine beliebige Seite des Sackkarrens gesteckt werden können, so dass die Last in einem Links- oder einem Rechtsschwenk über die erhöhte Ladefläche gebracht werden kann.

Wenn die Last auf eine erhöhte Ladeplattform, z. B. auf die Ladefläche eines Lasters abgesetzt werden soll, wird der Sackkarren ebenfalls vertikal gestellt und nach Anheben der Last, wie oben geschildert, um den Standfuss verschwenkt. Nachdem die Last abgesetzt ist, ist es häufig vorteilhaft, auch den Sackkarren auf die Ladeplattform zu heben. Hierzu werden der Schlitten für die Last und das Fahrgestell miteinander verbunden, so dass dieser Schlitten und das Fahrgestell stationär gehalten werden und der noch auf dem Boden stehende Schlitten in die Höhe der abgestellten Last nachgezogen wird.

Zum Verschieben des Gesamtschwerpunktes beim Transportieren der Last über Treppen wird der Sackkarren so abgestellt, dass das Fahrgestell in der Vertikalen steht. Dann wird der zweite, Last und Ladeschaufel aufnehmende Schlitten mit dem Fahrgestell verbunden und das Fahrgestell in die gewünschte Höhe verfahren, wobei der zweite Schlitten mit der Last mitgezogen wird. Dann werden die beiden Schlitten miteinander verbunden, so dass die Last arretiert wird. Die Verbindung zwischen Fahrgestell und zweiten Schlitten mit der Lastschaufel kann dann gelöst und das Fahrgestell wieder nach unten gefahren werden, bis die Räder Bodenkontakt haben. Der Sackkarren kann dann wieder in herkömmlicher Weise gezogen, geschoben oder für den Treppentransport eingesetzt werden, wobei jedoch die Last höher liegt.

Wenn die Last über Treppen transportiert werden soll, wird das Fahrgestell mit Rädern und ggf. mit Radschuhen wie in der DE-C-39 22 458 nach oben verfahren und mit heruntergeklappten Radschuhen auf einer Treppenstufe abgestellt, wonach die Last nachgezogen wird; diese Schritte werden entsprechend der Länge der Treppe wiederholt, wie in der DE-C-39 22 458 beschrieben.

Weitere Ausgestaltungen der Erfindung gehen aus den Unteransprüchen hervor.

Die Erfindung ist in zwei Ausführungsbeispielen anhand der Zeichnung näher erläutert; in dieser stellen dar:
- Figur 1: eine schematische Seitenansicht eines Sackkarrens gemäss der Erfindung mit einem Fahrgestell, einem daran angeordneten Radpaar und einem längs des Fahrgestelles verschiebbaren Schlitten zur Aufnahme einer Last;
- Figur 2: eine Ansicht des vertikal aufgestellten Sackkarrens gemäss Fig. 1 mit hochgehobener Last von hinten;
- Figur 3: eine modifizierte Ausführungsform eines Sackkarrens gemäss der Erfindung, bei dem für die Last eine Schlittenanordnung aus zwei Schlitten vorgesehen ist;
- Fig. 4 a und 4 b: Darstellungen des Sackkarrens aus Figur 3 zum Verfahren der Last längs des Fahrgestelles, um den Schwerpunkt zu verschieben;
- Fig. 5 a bis 5 c: schematische Darstellungen zur Erläuterung, wie mit einem Sackkarren gemäss Figur 3 eine Last auf eine hochgelegene Ladeplattform abgestellt und der Sackkarren nachgezogen werden kann.

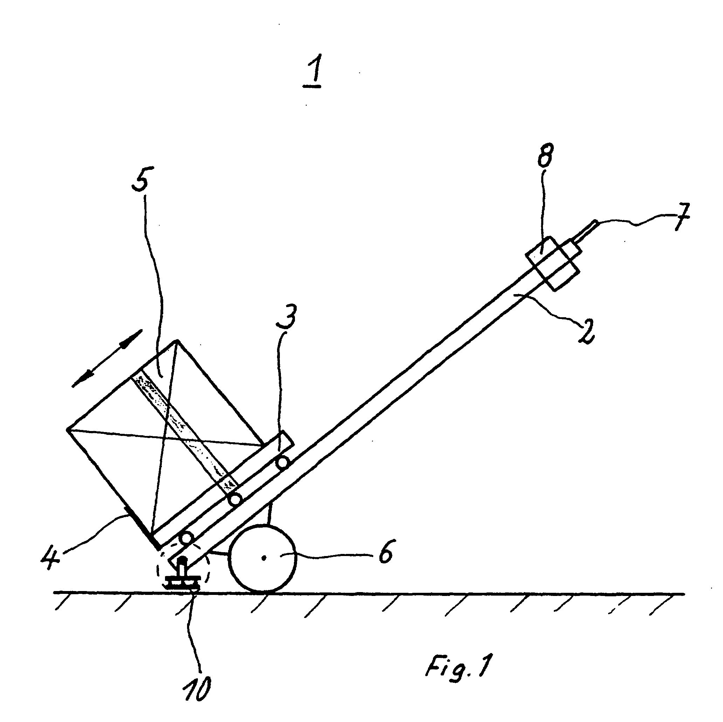

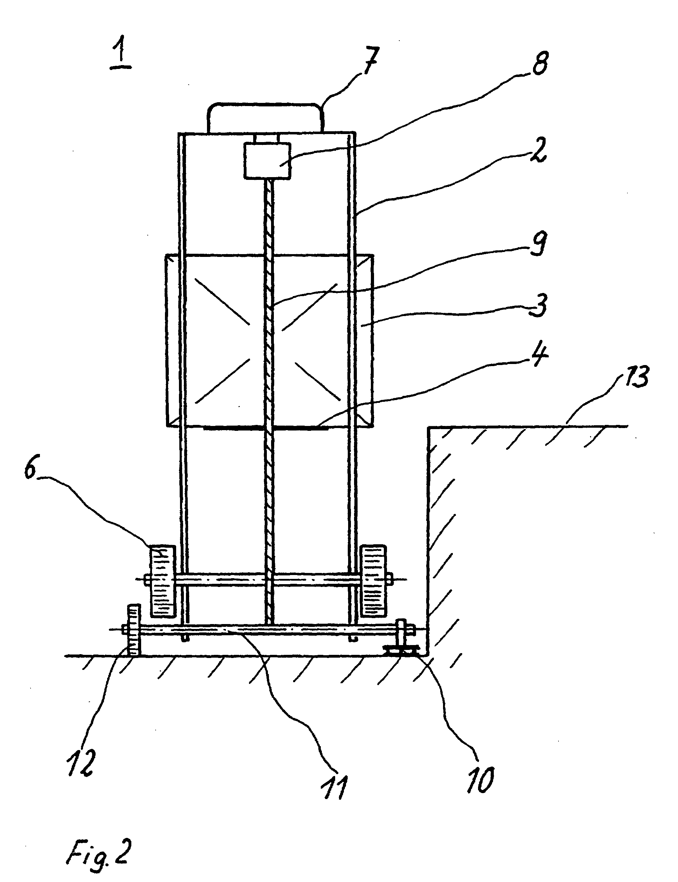

In den Figuren 1 und 2 ist ein Sackkarren 1 mit einem Fahrgestell 2 und mit einem darauf verfahrbaren Schlitten 3 für eine Ladeschaufel 4 zur Aufnahme einer Last 5 dargestellt. Am unteren Ende weist das Fahrgestell 2 ein fest montiertes Radpaar 6 auf, am oberen Ende des Fahrgestelles 2 eine Handhabe 7 zum Schieben bzw. Ziehen des Sackkarrens 1. Im oberen Bereich weist das Fahrgestell einen Antrieb, vorzugsweise einen batteriegetriebenen Elektroantrieb 8 auf, der eine Gewindespindel 9 antreibt. Mit dieser Gewindespindel 9 ist der Schlitten 3 über eine hier nicht dargestellte Gewindemutter verbunden, so dass der Schlitten 3 für die Ladeschaufel 4 in beiden, durch den Doppelpfeil in Figur 1 angedeuteten Richtungen längs des Fahrgestelles 2 verfahren werden kann.

Am unteren Ende des Fahrgestelles 2 ist eine horizontal gelegene Welle 11 angeordnet, die über die Seitenränder des Sackkarrens hinausragt. Auf ein Ende der Welle bzw, einen Wellenzapfen wird ein Drehpunktklotz 10 mit einem Drehteller, auf das gegenüberliegende Ende wird ein Stützrad 12 gesteckt, so dass die Laufrichtung des Stützrades parallel zu derjenigen der Räder des Sackkarrens ist.

Laufrichtung des Stützrades parallel zu derjenigen der Räder des Sackkarrens ist.

Wenn die Last 5 z. B. auf ein erhöhtes Ladepodest 13 (vgl. Figur 2) abgestellt werden soll, wixd der Sackkarren seitlich an das Ladepodest 13 herangefahren, in die Vertikale geschwenkt, so dass er nun auf dem Drehteller 10 und dem Stützrad 12 aufliegt, und die Last 5 in eine Höhe etwas oberhalb des Ladepodestes 13 gefahren. Anschliessend wird der Sackkarren um den Drehteller 10 herumgeschwenkt, wobei das Stützrad 12 einen Kreisbogen auf dem Boden beschreibt, bis sich die Last 5 oberhalb des Ladepodestes 13 befindet. Durch Absenken wird die Last abgestellt und der Sackkarren entfernt.

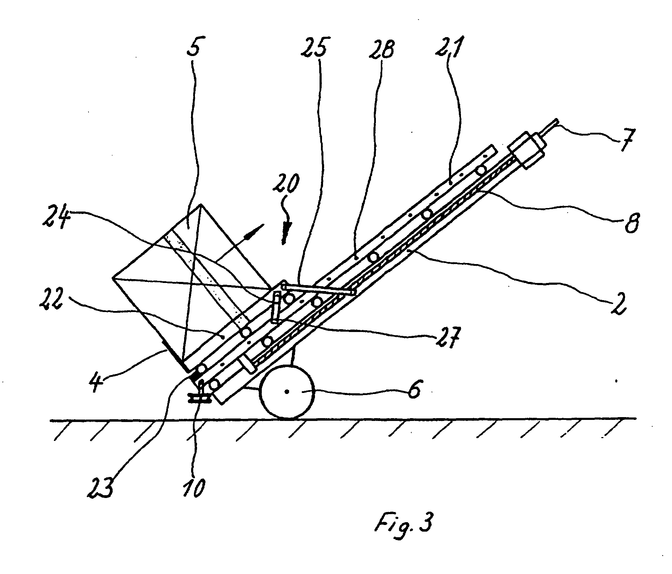

Der Sackkarren gemäss den Figuren 3, 4 und 5 unterscheidet sich im wesentlichen von dem ersten Ausführungsbeispiel dadurch, dass für die Last eine Schlittenanordnung 20 aus zwei Schlitten 21 und 22 vorgesehen ist. Der erste rahmenförmige Schlitten 21 ist mit dem Fahrgestell 2 über einen Spindelantrieb 8 verbunden, so dass dieser Schlitten und das Fahrgestell relativ zueinander verfahrbar sind. Auf diesem ersten Schlitten gleitet frei der zweite Schlitten 22, der die Ladeschaufel 4 und die Last 5 aufnimmt. In seiner unteren Lage liegt dieser Schlitten an einem Anschlag 23 an. Zwischen den beiden Schlitten 21 und 22 ist eine lösbare Verbindungseinrichtung 24 vorgesehen, über eine weitere lösbare Verbindungseinrichtung 25 können der zweite Schlitten 22 und das Fahrgestell 2 miteinander verbunden werden.

Der Schlitten 22 mit der Lastschaufel 4 kann in einer gewünschten Höhe mit Hilfe der Verbindungseinrichtung 24 gehalten werden, die z. B. einen Feststeller in Form eines Federstahlbügels aufweist, der an dem Schlitten 22 angelenkt ist und an seinem unteren Ende einen Bolzen 27 trägt, der in entsprechende Löcher 28 am Rand des ersten Schlittens 21 eingreifen kann. Bolzen und Löcher sind so konfiguriert, dass beim Hochheben der Last der

Bolzen 27 über die Löcher 28 gleitet und erst bei einem zweiten Absenken der Last 5 in eines der Löcher 28 einrastet.

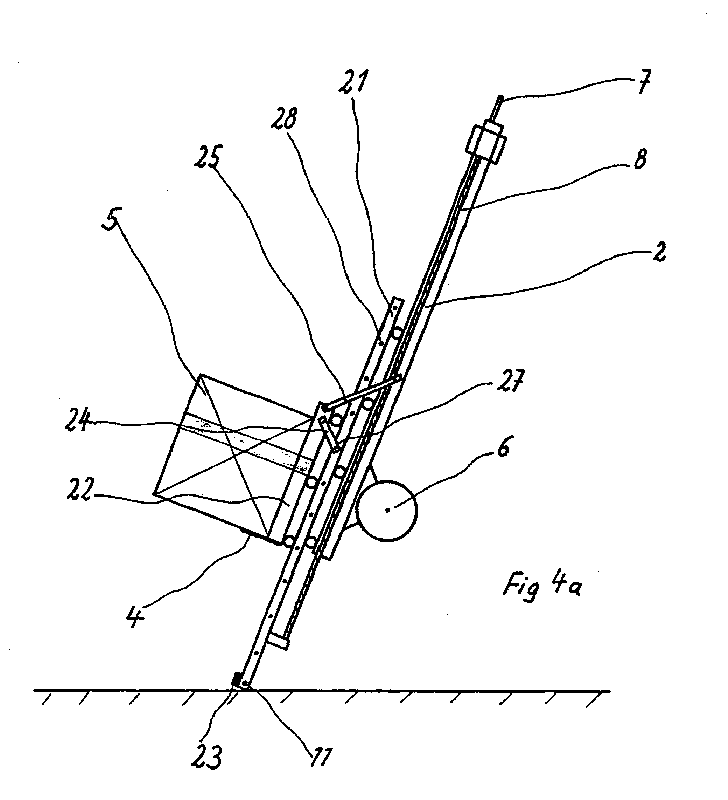

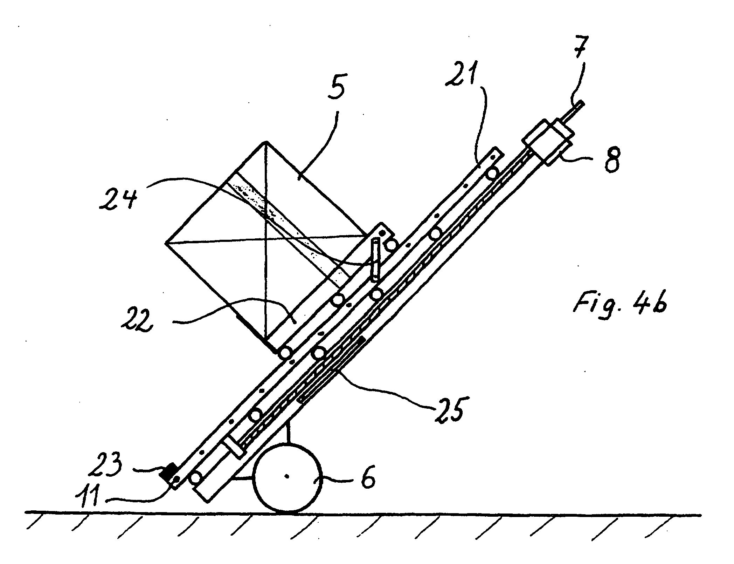

Die Verbindungseinrichtung 25 zwischen Schlitten 22 und Fahrgestell 2 ist ein Zugelement, z.B. eine Stahlleiste, die an dem Fahrgestell 2 angelenkt ist und mit dem Schlitten 22 gekoppelt werden kann. Wenn bei eingehängter Stahlleiste 25 das Fahrgestell 2 mit dem Radpaal 6 durch den Antrieb 8 längs des ersten Schlittens 21 nach oben verfahren wird, so wird der Schlitten 22 für die Ladeschaufel 4 und die Last 5 durch die Stahlleiste 25 mitgezogen, wie dieses in Figur 4a gezeigt ist. In der gewünschten Höhe wird die Last 5 geringfügig abgesenkt, bis der Bolzen 27 des Federstahlbügels 24 in eines der Löcher 28 einrastet. Die beiden Schlitten sind dann miteinander gekoppelt. Nach Aushängen der Stahlleiste 25 kann das Fahrgestell abgesenkt und der Sackkarren mit höher, und somit für eine Bedienungsperson statisch optimaler gelegenem Schwerpunkt für den Treppentransport eingesetzt werden; vgl. Fig. 4 b.

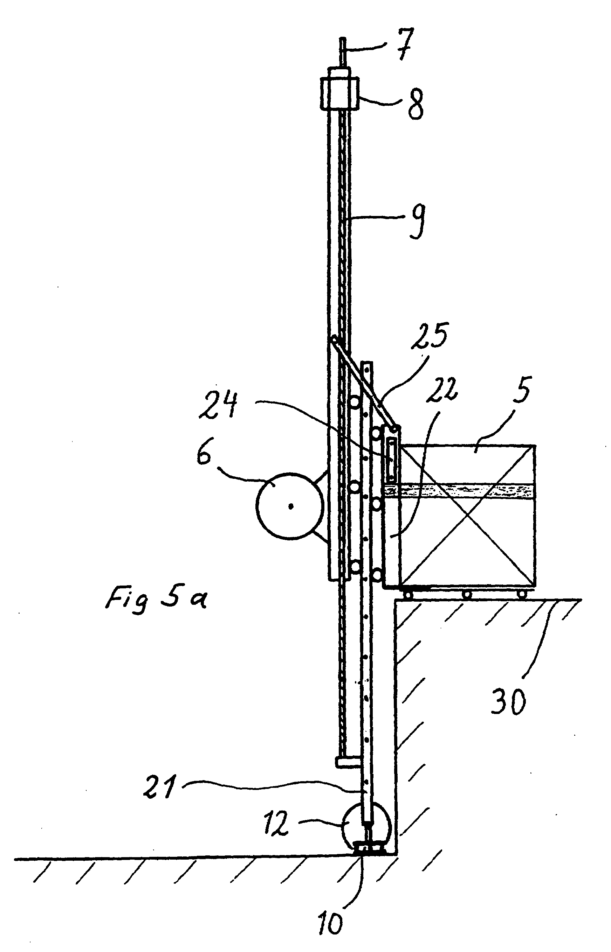

Um die Last 5 auf eine erhöhte Ladeplattform 30, z.B. die Ladefläche eines Kleinlasters, abzusetzen, wird der Sackkarren seitlich neben die Kante der Ladeplattform gefahren und in die Vertikale gestellt. In dieser Stellung ruht der Sackkarren auf dem Drehteller 10 und dem Stützrad 12, die auf eine horizontale Welle 11 am unteren Ende des ersten Schlittens 21 aufgesteckt sind. Anschliessend wird die Last 5 durch Verbinden des Schlittens 22 mit dem Fahrgestell 2 über die Stahlleiste 25 in die Höhe der Ladeplattform 30 gefahren. Dann wird der Sackkarren um den Drehteller 10 verschwenkt, bis die Breitseite des Sackkarrens praktisch an der Kante der Ladeplattform 30 anliegt und die Last 5 sich oberhalb dieser Plattform 30 befindet; vgl. Fig. 5a. Die Last 5 wird abgesenkt und auf der Ladeplattform 30 abgestellt.

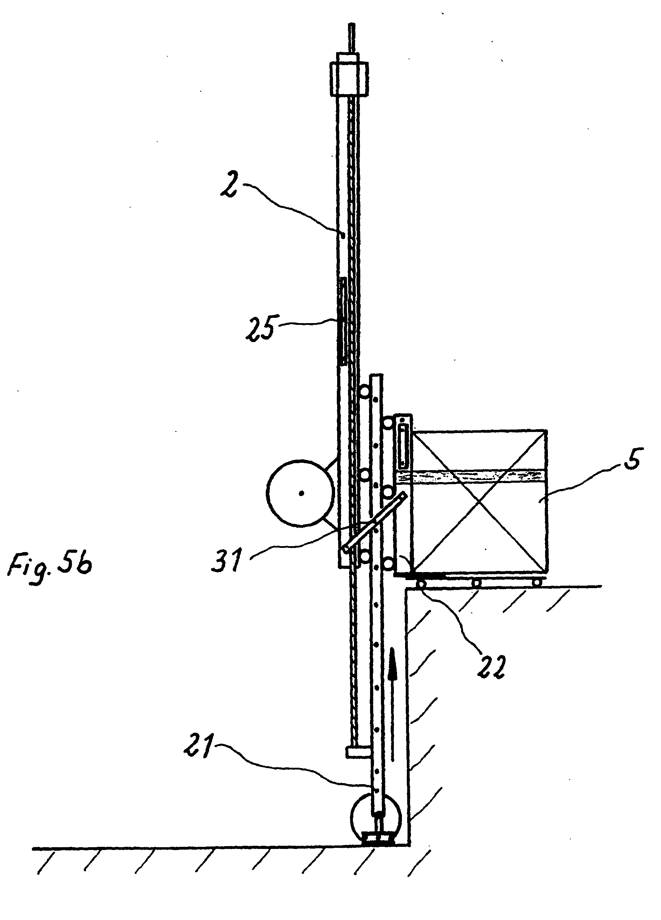

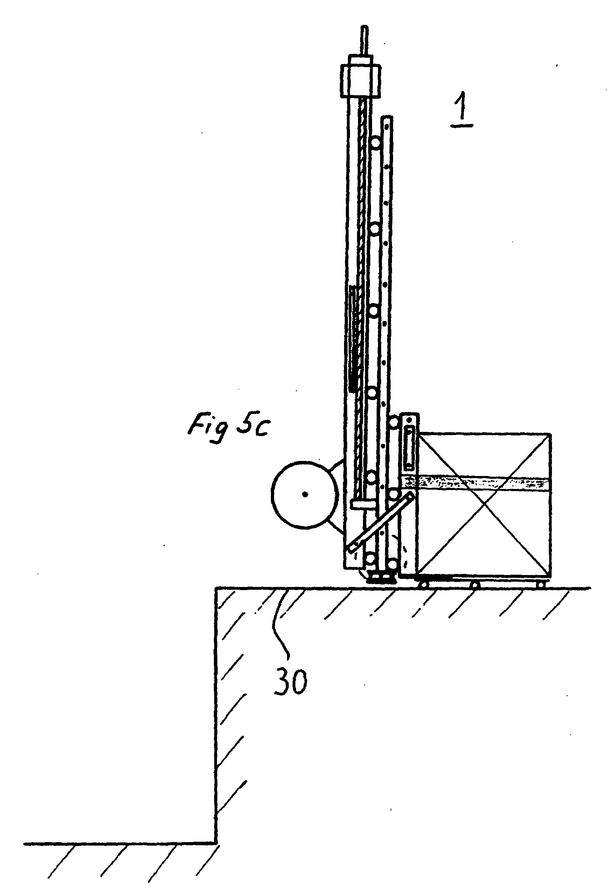

Der Sackkarren kann anschliessend entfernt werden. Es ist jedoch auch, wie in Figur 5b gezeigt, möglich, nunmehr den Schlitten 22 für die Last 5 über ein weiteres Zugelement, z.B wiederum eine Stahlleiste 31, mit dem Fahrgestell 2 zu verbinden. Wird jetzt der Antrieb eingeschaltet, so kann der noch am Boden stehende Schlitten 21 in Pfeilrichtung nach oben bis auf die Höhe der Ladeplattform nachgezogen werden. Anschliessend kann der gesamte Sackkarren auf die Ladeplattform 30 bzw. in den Kleinlaster geschoben werden; vgl. Fig. 5 c. Die Zugelemente 25 und 31 können ein und dasselbe Teil sein, das lediglich zwischen den beiden Schlitten entsprechend der Funktion umgehängt wird.

## Patentansprüche

1. Sackkarren (1) zum Transportieren von Lasten (5) mit einem Fahrgestell (2), an dessen unterem Ende auf der Oberseite eine Ladeschaufel (4) zur Unterstützung der Last (5) sowie auf der der Ladeschaufel (4) gegenüberliegenden Unterseite ein Radpaar (6) und an dessen oberem Ende eine Handhabe (7) zum Ziehen oder Schieben des Sackkarrens (1) vorgesehen sind, wobei die Ladeschaufel (4) mit einem Schlitten (3) verbunden ist, der mit Hilfe eines Antriebes (8) längs des Fahrgestelles (2) verfahrbar und in seiner jeweiligen Position festhaltbar ist, **dadurch gekennzeichnet, daß** am unteren Ende des Sackkarrens (1) auf der Seite eines Rades (6) ein Standfuß (10) und auf der Seite des anderen Rades (6) ein Stützrad (12) vorgesehen sind, die so angeordnet sind, daß sie erst bei einer steilen, im wesentlichen vertikalen Stellung des Sackkarrens (1) gemeinsam in Kontakt mit dem Boden treten, wonach der Sackkarren (1) mit der nach oben verfahrenen Last (5) in dieser steilen Stellung um den Standfuß (10) verschwenkbar ist und das Stützrad (12) während des Verschwenkens Kontakt mit dem Boden hält.

2. Sackkarren nach Anspruch 1, **dadurch gekennzeichnet, daß** der Standfuß als Abstützung auf dem Boden einen Drehteller (10) aufweist.

3. Sackkarren nach Anspruch 1 oder 2, **dadurch gekennzeichnet, daß** Stützrad (12) und Standfuß (10) auf eine Welle (11) aufaufsteckbar sind, die am unteren Ende des Sackkarrens horizontal verläuft.

4. Sackkarren nach einem der vorhergehenden Ansprüche, **dadurch gekennzeichnet, dass** für die Last eine Schlittenanordnung (20) aus zwei Schlitten (21, 22) vorgesehen ist, nämlich einem ersten, längs des Fahrgestelles (2) verfahrbaren Schlitten (21) und einem auf diesem Schlitten frei laufenden, die Ladeschaufel (4) und die Last (5) tragenden zweiten Schlitten (22), und dass zwischen Fahrgestell (2) und erstem Schlitten (21) der Antrieb (8) vorgesehen ist.

5. Sackkarren nach Anspruch 4, **dadurch gekennzeichnet, dass** zwischen den beiden Schlitten (21, 22) sowie zwischen dem zweiten Schlitten (22) und dem Fahrgestell (2) jeweils eine lösbare Verbindungseinrichtung (24, 25) vorgesehen ist, und dass der Standruss (10) und das Stützrad (12) am unteren Ende des ersten Schlittens (21) angeordnet sind.

6. Sackkarren nach Anspruch 5, **dadurch gekennzeichnet, dass** die Verbindungseinrichtung (24) einen Bolzen (27) trägt, der in Löcher (28) am Rand des ersten Schlittens (21) eingreifen kann, wobei der Bolzen (27) und die Löcher (28) so konfiguriert sind, dass beim Hochheben der Last (5) der Bolzen (27) über die Löcher (28) gleitet und erst bei einem leichten Absenken der Last (5) in eines der Löcher (28) einrastet.

7. Sackkarren nach einem der vorhergehenden Ansprüche, **dadurch gekennzeichnet, dass** der Antrieb (8) ein Spindelantrieb ist.

## Claims

1. Sack trolley (1) for transporting loads (5), with a chassis (2) on whose lower end, on the upper surface, there is provided a loading shovel (4) for supporting the load (5), and on the underside opposite the loading shovel (4) there is a pair of wheels (6), and at its upper end a handle (7) for pulling or pushing the sack trolley (1), wherein the loading shovel (4) is connected with a slide (3) which - with the aid of a drive (8) - can be moved along the chassis (2) and which can be fixed in its respective position,
**characterised in that**
on the lower end of the sack trolley (1) on the side of the one wheel (6) there is a stand base (10) and on the side of the other wheel (6) there is a support wheel (12), which are arranged in such a way that they only jointly make contact with the ground in the case of a steep, essentially vertical position of the sack trolley (1), after which the sack trolley (1), with the load (5) which can be moved upwards, can be pivoted in this steep position around the stand base (10) and the support wheel (12) maintains contact with the ground during this pivoting.

2. Sack trolley in accordance with claim 1, **characterised in that** the stand base, as a support on the ground, has a rotary plate (10).

3. Sack trolley in accordance with claim I or 2, **characterised in that** the support wheel (12) and stand base (10) can be placed on a shaft (11), which runs horizontally at the lower end of the sack trolley.

4. Sack trolley in accordance with one of the preceding claims, **characterised in that** for the load, a slide arrangement (20) comprising two slides (21, 22) is provided, namely a first slide (21) which can be moved along the chassis (2), and a second slide (22) running freely on this slide and bearing the loading shovel (4) and the load (5), and that the drive (8) is provided between the chassis (2) and the first slide (21).

5. Sack trolley in accordance with claim 4, **characterised in that** between the two slides (21, 22) as well as between the second slide (22) and the chassis (2) a detachable connection device (24, 25) is provided in each case, and that the stand base (10) and the support wheel (12) are arranged at the lower end of the first slide (21).

6. Sack trolley in accordance with claim 5, **characterised in that** the connection device (24) has a bolt (27) which can engage into holes (28) at the edge of the first slide (21), wherein the bolt (27) and the holes (28) are configured such that when the load (5) is raised, the bolt (27) slides over the holes and only engages into one of the holes (28) when the load (5) is lowered slightly.

7. Sack trolley in accordance with one of the preceding claims, **characterised in that** the drive (8) is a spindle drive.

## Revendications

1. Diable (1) propre à transporter des charges (5), comportant un châssis (2) à l'extrémité inférieure duquel sont prévus, du côté supérieur, un élément de maintien (4) pour maintenir la charge (5) et, du côté inférieur faisant face à l'élément de maintien (4), une paire de roues (6), et à l'extrémité supérieure duquel est prévue une poignée (7) pour tirer ou pousser le diable (1), l'élément de maintien (4) étant couplé à un chariot (3) pouvant être déplacé le long du châssis (2) à l'aide d'une commande (8) et y être maintenu dans une position quelconque, **caractérisé en ce que**, à l'extrémité inférieure du diable (1), un pied (10) est prévu du côté d'une roue (6) et une roue d'appui (12) est prévue du côté de l'autre roue (6), le pied et la roue d'appui étant disposés de sorte que, dans un premier temps, en position redressée, sensiblement verticale du diable (1), ils entrent ensemble en contact avec le sol, après quoi le diable (1) peut subir une rotation autour du pied (10), la charge (5) se déplaçant vers le haut dans cette position redressée, tandis que la roue de soutien (12) reste en contact avec le sol pendant le mouvement de rotation.

2. Diable selon la revendication 1, **caractérisé en ce que** le pied comporte un plateau tournant (10) servant d'appui sur le sol.

3. Diable selon la revendication 1 ou 2, **caractérisé en ce que** la roue de soutien (12) et le pied (10) peuvent être montés sur un arbre (11) s'étendant horizontalement à l'extrémité inférieure du diable.

4. Diable selon l'une quelconque des revendications précédentes, **caractérisé en ce qu'**il est prévu pour la charge un agencement (20) de deux chariots (21, 22), à savoir un premier chariot (21) mobile le long du châssis (2) et un deuxième chariot (22) se déplaçant librement sur le premier chariot et portant l'élément de maintien (4) et la charge (5), et **en ce que** la commande (8) est agencée entre le châssis (2) et le premier chariot (21).

5. Diable selon la revendication 4, **caractérisé en ce qu'**un dispositif de liaison amovible (24, 25) est prévu respectivement entre les deux chariots (21, 22) et entre le deuxième chariot (22) et le châssis (2), et **en ce que** le pied (10) et la roue de soutien (12) sont disposés à l'extrémité inférieure du premier chariot (21).

6. Diable selon la revendication 5, **caractérisé en ce que** le dispositif de liaison (24) comporte un goujon (27) qui peut s'engager dans des trous (28) situés au bord du premier chariot (21), le goujon (27) et les trous (28) étant agencés de sorte que le goujon (27) glisse sur les trous (28) lors d'un déplacement vers le haut de la charge (5) et se place dans un des trous (28) lors d'un faible déplacement vers le bas de la charge (5).

7. Diable selon l'une quelconque des revendications précédentes, **caractérisé en ce que** la commande (8) est une commande à vis.
